# EUROPEAN PATENT APPLICATION

(11) **EP 2 533 234 A1**
(43) Date of publication of application: **12.12.2012**
(21) Application number: 12004300.5
(22) Date of filing: 06.06.2012
(51) Int. Cl.: G09G 3/34, G09G 3/28, G09G 3/20, G09G 5/00

(54) **Image display apparatus and method for operating the same**

(30) Priority: 09.06.2011 KR 20110055671
(71) Applicant: LG Electronics Inc., Yeongdeungpo-gu Seoul 150-721 (KR)
(72) Inventor: Lee, Sangho, 137-724, Seoul (KR); Lee, Jae II, 137-724, Seoul (KR)
(74) Representative: Katérle, Axel

(57) **Abstract**

An image display apparatus and a method for operating the same are disclosed. The method for operating an image display apparatus includes entering a blackboard mode, receiving an image, inverting a gray level of the received image, and displaying the image with the inverted gray level. Accordingly, it is possible to improve visibility in a blackboard mode.

## Description

### CROSS-REFERENCE TO RELATED APPLICATION

This application claims the priority benefit of Korean Patent Application No. 10-2011-0055671, filed on June 9, 2011 in the Korean Intellectual Property Office, the disclosure of which is incorporated herein by reference.

### BACKGROUND OF THE INVENTION

### 1. Field of the invention

The present invention relates to an image display apparatus and a method for operating the same, and more particularly to an image display apparatus, which is able to improve visibility in a blackboard mode, and a method for operating the same.

### 2. Description of the Related Art

An image display apparatus functions to display images to a user. A user can view a broadcast program using an image display apparatus. The image display apparatus can display a broadcast program selected by the user on a display from among broadcast programs transmitted from broadcasting stations. The recent trend in broadcasting is a worldwide transition from analog broadcasting to digital broadcasting.

Digital broadcasting transmits digital audio and video signals. Digital broadcasting offers many advantages over analog broadcasting, such as robustness against noise, less data loss, ease of error correction, and the ability to provide clear, high-definition images. Digital broadcasting also allows interactive viewer services, compared to analog broadcasting.

### SUMMARY OF THE INVENTION

Therefore, the present invention has been made in view of the above problems, and it is an object of the present invention to provide an image display apparatus, which is able to improve visibility in a blackboard mode, and a method for operating the same.

In accordance with an aspect of the present invention, the above and other objects can be accomplished by the provision of a method for operating an image display apparatus, including entering a blackboard mode, receiving an image, inverting a gray level of the received image, and displaying the image with the inverted gray level.

In accordance with another aspect of the present invention, there is provided an image processing apparatus including an input signal processor configured to process a received image and output the processed image, a gray level inverter configured to invert a gray level of the image when entering a backboard mode, and a display configured to display the image with the inverted gray level.

According to the embodiments of the present invention, it is possible to improve visibility in the blackboard mode, by inverting the gray level of the received image in the blackboard mode.

In particular, it is possible to further improve visibility in the blackboard mode, by inverting the gray level when the number of colors of the received image is less than or equal to a predetermined value or when luminance of a background region of the received image is higher than luminance of a region excluding the background region.

It is possible to improve visibility in the blackboard mode, by separating the gray level of the received image into groups and selectively inverting the gray level.

It is possible to improve visibility in the blackboard mode, by inverting only a luminance signal of the received image.

It is possible to decrease the overall luminance of an image frame by gray level inversion. Thus, it is possible to reduce power consumption.

According to another embodiment of the present invention, it is possible to improve visibility in the blackboard mode, by performing complementary gamma signal processing with respect to the received image.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram showing an internal configuration of an image display apparatus according to an embodiment of the present invention;
FIGS. 2A to 2C are diagrams showing various examples of a display of FIG. 1;
FIG. 3 is a block diagram showing an internal configuration of a controller of FIG. 1;
FIG. 4 is a flowchart illustrating a method for operating an image display apparatus according to an embodiment of the present invention;
FIGS. 5 to 10 are views referred to for describing various examples of the method for operating the image display apparatus, illustrated in FIG. 4;
FIG. 11 is a flowchart illustrating a method for operating an image display apparatus according to an embodiment of the present invention;
FIGS. 12 to 15 are views referred to for describing various examples of the method for operating the image display apparatus, illustrated in FIG. 11;
FIG. 16 is a block diagram showing an internal configuration of an image display apparatus according to another embodiment of the present invention;
FIG. 17 is a diagram showing the internal configuration of the image display apparatus of FIG. 16;
FIG. 18 is a diagram explaining an example of an operation of a remote controller for controlling the image display apparatus of FIG. 16;
FIG. 19 is a block diagram showing an internal configuration of a remote controller of FIG. 2; and
FIGS 20 to 22 are diagrams explaining operation of a plasma display panel in a touch pen mode according to an embodiment of the present invention.

### DETAILED DESCRIPTION OF THE PREFERRED EMBODIMENTS

Exemplary embodiments of the present invention will be described with reference to the attached drawings.

The terms "module" and "unit" attached to describe the names of components are used herein to help the understanding of the components and thus they should not be considered as having specific meanings or roles. Accordingly, the terms "module" and "unit" may be used interchangeablely.

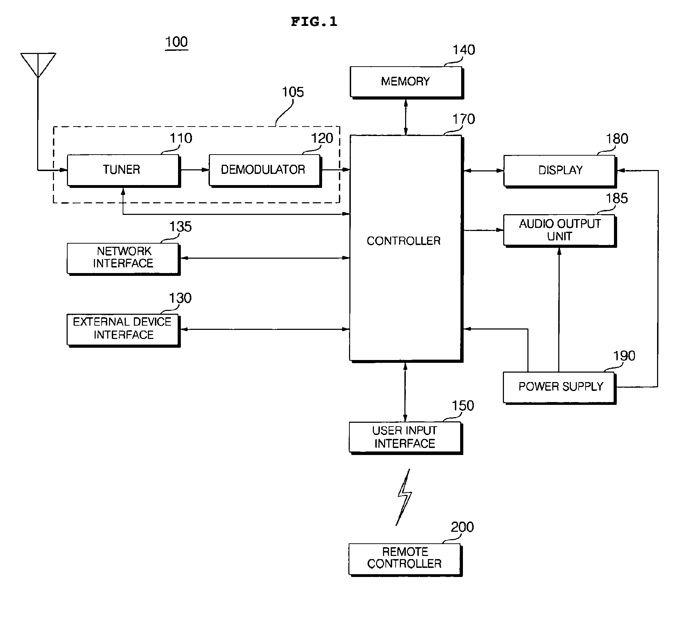

FIG. 1 a diagram showing an internal configuration of an image display apparatus according to an embodiment of the present invention.

Referring to FIG. 1, an image display apparatus 100 according to the embodiment of the present invention includes a broadcast reception unit 105, an external device interface 130, a network interface 135, a memory 140, a user input interface 150, a controller 170, a display 180, an audio output unit 185, a power supply 190 and a remote controller 200.

The broadcast reception unit 105 may include a tuner 110, a demodulator 120 and a network interface 135. As needed, the broadcast reception unit 105 may include only the tuner 110 and the demodulator 120 or only the network interface 135.

The tuner 110 tunes to a Radio Frequency (RF) broadcast signal corresponding to a channel selected by a user from among RF broadcast signals received through an antenna or RF broadcast signals corresponding to all channels previously stored in the image display apparatus. The tuned RF broadcast is converted into an Intermediate Frequency (IF) signal or a baseband Audio/Video (AV) signal. In order to simultaneously select a plurality of channels, a plurality of tuners 110 may be included.

The demodulator 120 receives the digital IF signal DIF from the tuner 110 and demodulates the digital IF signal DIF.

The demodulator 120 may perform demodulation and channel decoding, thereby obtaining a stream signal. The stream signal may be a signal in which a video signal, an audio signal and a data signal are multiplexed.

The stream signal output from the demodulator 120 may be input to the controller 170 and thus subjected to demultiplexing and AN signal processing. The processed video and audio signals are output to the display 180 and the audio output unit 185, respectively.

The external device interface 130 may serve as an interface between an external device and the image display apparatus 100. For interfacing, the external device interface 130 may include an AN Input/Output (I/O) unit (not shown) and/or a wireless communication module (not shown).

The external device interface 130 may be connected to an external device such as a Digital Versatile Disc (DVD) player, a Blu-ray player, a game console, a camera, a camcorder, or a computer (e.g., a laptop computer), wirelessly or by wire.

The A/V I/O unit may receive the video and audio signals of the external device. The wireless communication module may perform short-range wireless communication with other electronic devices.

The external device interface 130 may be connected to various set-top boxes through at least one of the above-described ports and may thus receive data from or transmit data to the various set-top boxes.

The external device interface 130 may transmit or receive data to or from a pointing signal processor 300.

The network interface 135 serves as an interface between the image display apparatus 100 and a wired/wireless network such as the Internet. The network interface 135 may receive content or data provided by an Internet or content provider or a network operator over a network.

The memory 140 may store various programs necessary for the controller 170 to process and control signals, and may also store processed video, audio and data signals.

The memory 140 may temporarily store a video, audio and/or data signal received from the external device interface 130. The memory 140 may store information about a predetermined broadcast channel by the channel storage function of a channel map.

While the memory 140 is shown in FIG. 1 as configured separately from the controller 170, to which the present invention is not limited, the memory 140 may be incorporated into the controller 170.

The user input interface 150 transmits a signal input by the user to the controller 170 or transmits a signal received from the controller 170 to the user.

For example, the user input interface 150 may transmit/receive various user input signals such as a power-on/off signal, a channel selection signal, and a screen setting signal to/from the remote controller 200 or transmit user input signals received from local keys (not shown), such as inputs of a power key, a channel key, and a volume key, and setting values, to the controller 170, transmit a user input signal received from a sensing unit (not shown) for sensing a user gesture to the controller 170, or transmit a signal received from the controller 170 to the sensing unit (not shown).

The controller 170 may demultiplex the stream signal received from the tuner 110, the demodulator 120, or the external device interface 130 into a number of signals, process the demultiplexed signals into audio and video data, and output the audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

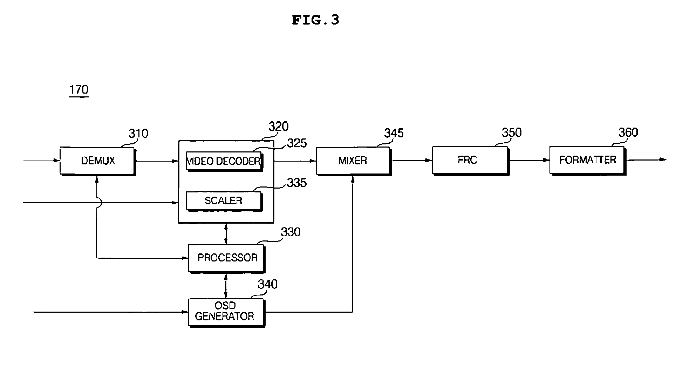

While not shown in FIG. 1, the controller 170 may include a DEMUX, a video processor, etc., which will be described in detail later with reference to FIG. 3.

The controller 170 may control the overall operation of the image display apparatus 100. For example, the controller 170 controls the tuner 110 to tune to an RF signal corresponding to a channel selected by the user or a previously stored channel.

The controller 170 may control the image display apparatus 100 by a user command input through the user input interface 150 or an internal program.

The controller 170 may control the display 180 to display images. The image displayed on the display 180 may be a Two-Dimensional (2D) or Three-Dimensional (3D) still or moving image.

The display 180 converts the video signal, the data signal, the OSD signal and the control signal processed by the controller 170 or the video signal, the data signal and the control signal received by the external device interface 130 and generates a drive signal.

The display 180 may be a Plasma Display Panel (PDP), a Liquid Crystal Display (LCD), an Organic Light-Emitting Diode (OLED) display or a flexible display. In particular, the display 180 may be a 3D display.

If the display 180 is a touchscreen, the display 180 may function as not only an output device but also as an input device.

The audio output unit 185 receives the audio signal processed by the controller 170 and outputs the received audio signal as sound.

In order to sense a user gesture, as described above, a sensing unit (not shown) including at least one of a touch sensor, a voice sensor, a position sensor and a motion sensor may be further included in the image display apparatus 100. The signal sensed by the sensor unit (not shown) is transmitted to the controller 170 through the user input interface 150.

The controller 170 may sense the user gesture by the image captured by a camera unit (not shown), the signal sensed by the sensor unit (not shown), or a combination thereof.

The power supply 190 supplies power to the image display apparatus 100. Particularly, the power supply 190 may supply power to the controller 170 which may be implemented as a System On Chip (SOC), the display 180 for displaying the video signal, and the audio output unit 185 for outputting the audio signal.

The power supply 190 may include a converter (not shown) for converting AC voltage into DC voltage. The power supply 190 may further include a DC/DC converter for changing the level of the DC voltage and outputting the DC voltage with the changed level.

The remote controller 200 transmits user input to the user input interface 150. For transmission of user input, the remote controller 200 may use various communication techniques such as IR communication, RF communication, Bluetooth, Ultra Wideband (UWB) and ZigBee. In addition, the remote controller 200 may receive a video signal, an audio signal or a data signal from the user input interface 150 and output the received signals visually or audibly.

The above-described image display apparatus 100 may be a fixed or mobile digital broadcast receiver capable of receiving a digital broadcast.

The image display apparatus described in the present specification may include a TV receiver, a mobile phone, a smart phone, a notebook computer, a digital broadcast terminal, a Personal Digital Assistant (PDA), a Portable Multimedia Player (PMP), etc.

The block diagram of the image display apparatus 100 illustrated in FIG. 1 is only exemplary. Depending upon the specifications of the image display apparatus 100 in actual implementation, the components of the image display apparatus 100 may be combined or omitted or new components may be added. That is, two or more components may be incorporated into one component or one component may be configured as separate components, as needed. In addition, the function of each block is described for the purpose of describing the embodiment of the present invention and thus specific operations or devices should not be construed as limiting the scope and spirit of the present invention.

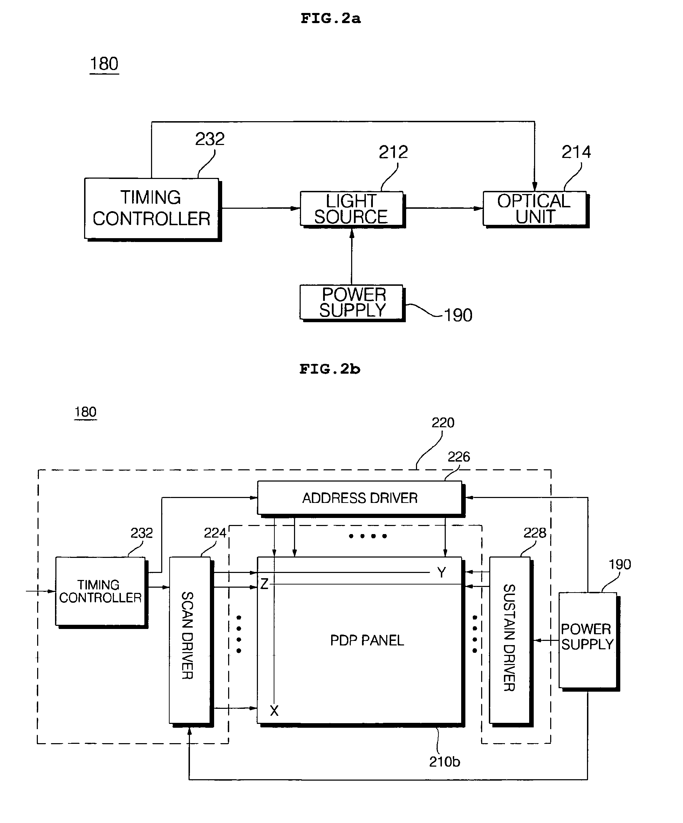

FIGS. 2A to 2C are diagrams showing various examples of the display of FIG. 1.

First, FIG. 2A shows a projector which is the display 180.

Referring to FIG. 2A, the display 180 based on a plasma display panel may include a light source 212, an optical unit 214, a timing controller 232 and a power supply 190.

The light source 212 generates light (e.g., a laser) for externally outputting an image. The light source may be implemented using various methods using a laser or LED.

The optical unit 214 forms an image using the light generated by the light source and externally projects the formed image.

For example, if white light output from the light source 212 is received, the optical unit 214 separates the white light into RGB light, focuses the separated RGB light using a mirror and a prism, and externally projects an image formed by the focused light.

As another example, if RGB light is received from the light source 212, the optical unit 214 may focus the RGB light using a mirror and a prism and externally project an image formed by the focused light.

The timing controller 232 receives a control signal, an RGB data signal, a vertical synchronization signal Vsync from the controller 170 and provides the control signal to the light source 212 or the optical unit 214. By such a control signal, a projection image based on the RGB data signal is formed in the optical unit 214.

As such a projector, various projectors may be used. For example, an LCD projector using an LCD panel, a digital lighting processing (DLP) projector using a digital micromirror, an LED projector using an LED as a light source, etc. may be used.

Next, FIG. 2B shows the display 180 including a plasma display panel.

Referring to FIG. 2B, the display 180 based on the plasma display panel includes a plasma display panel 210b and a driving circuit 220.

The plasma display panel 210b includes scan electrodes Y and sustain electrodes Z formed on a first substrate in parallel and address electrodes X formed on a second substrate to cross the scan electrodes Y and the sustain electrodes Z.

In order to display an image, a plurality of scan electrode lines Y, sustain electrode lines Z and address electrode lines X are arranged in a matrix to cross each other and discharge cells are formed at crossing regions thereof. RGB discharge cells may be formed.

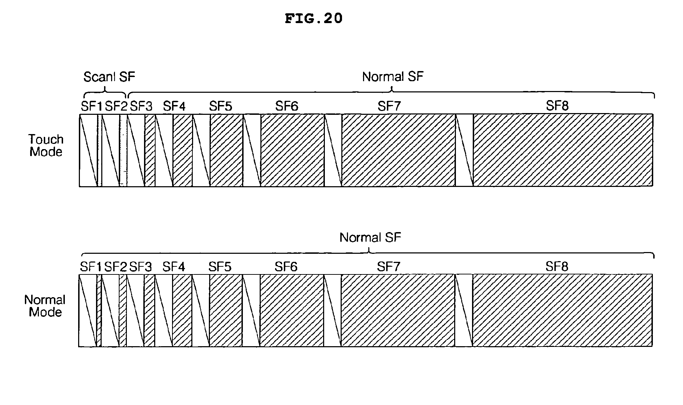

The driving circuit 220 drives the plasma display panel 210b using a control signal and data signal supplied from the controller 170 of FIG. 1. The driving circuit 220 includes a timing controller 232, a scan driver 224, a sustain driver 228 and an address driver 226. The operations of the scan driver 224, the sustain driver 228 and the address driver 226 will be described later with reference to FIG. 20 and so on.

The timing controller 232 receives a control signal, an RGB data signal and a vertical synchronization signal Vsync from the controller 170, controls the scan driver 224 and the sustain driver 228 in correspondence with the control signal, rearranges the RGB data signal, and supplies the rearranged RGB data signal to the address driver 226.

The power supply 190 may supply DC voltages with a plurality of levels necessary for the plasma display panel 210b to the scan driver 224, the sustain driver 228 and the address driver 226.

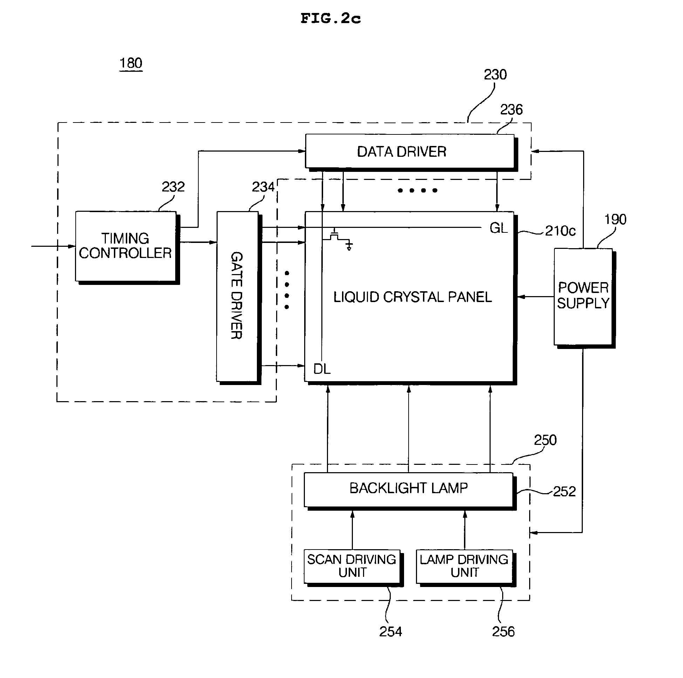

Next, FIG. 2C shows the display 180 including a liquid crystal display panel.

Referring to FIG. 2C, the display 180 based on the liquid crystal display (LCD) panel includes a liquid crystal panel 210c, a driving circuit 230 and a backlight 250.

The liquid crystal panel 210c includes a first substrate on which a plurality of gate lines GL and data lines DL are arranged to cross each other in a matrix and thin film transistors and pixel electrodes connected thereto are formed at crossing regions, a second substrate including a common electrode, and a liquid crystal layer formed between the first substrate and the second substrate, in order to display an image.

The driving circuit 230 drives the liquid crystal panel 210 using a control signal and data signal supplied from the controller 170 of FIG. 1. The driving circuit 230 includes a timing controller 232, a gate driver 234 and a data driver 236.

The timing controller 232 receives a control signal, an RGB data signal and a vertical synchronization signal Vsync from the controller 170, controls the gate driver 234 and the data driver 236 in correspondence with the control signal, rearranges the RGB data signal, and supplies the rearranged RGB data signal to the data driver 236.

Under the control of the gate driver 234, the data driver 236 and the timing controller 232, a scan signal and an image signal are supplied to the liquid crystal panel 210 through the gate lines GL and the data lines DL.

The backlight 250 supplies light to the liquid crystal panel 210. The backlight 250 may include a plurality of backlight lamps 252 as a light source, a scan driving unit 254 for controlling scanning of the backlight lamps 252, and a lamp driving unit 256 for turning the backlight lamps 252 on/off.

If the plurality of backlight lamps (not shown) are turned on, light is irradiated onto an entire surface of the liquid crystal panel 210c by a diffuser plate (not shown) for diffusing light from the lamps, a reflection plate (not shown) for reflecting light and an optical sheet (not shown) for polarizing, focusing and diffusing light.

The plurality of backlight lamps (not shown) is simultaneously turned on or sequentially driven on a per block basis. The plurality of backlight lamps (not shown) may be light emitting diode (LED) type backlight lamps.

In a state in which light transmittance of the liquid crystal layer is controlled by an electric field formed between the pixel electrodes and the common electrode of the liquid crystal panel 210c, a predetermined image is displayed using light emitted from the backlight 250.

The power supply 190 may supply a common electrode voltage Vcom to the liquid crystal panel 210c and supply a gamma voltage to the data driver 236. In addition, the power supply 190 supplies a driving voltage for driving the backlight lamps 252 to the backlight 250.

FIG. 3 is a block diagram showing an internal configuration of the controller of FIG. 1.

Referring to FIG. 3, the controller 170 according to the embodiment of the present invention may include a DEMUX 310, a video processor 320, a processor 330, an OSD generator 340, a mixer 345, a Frame Rate Converter (FRC) 350, and a formatter 360. The controller 170 may further include an audio processor (not shown) and a data processor (not shown).

The DEMUX 310 demultiplexes an input stream. For example, the DEMUX 310 may demultiplex an MPEG-2 TS into a video signal, an audio signal, and a data signal. The input stream signal input to the DEMUS 310 may be received from the tuner 110, the demodulator 120 or the external device interface 130.

The video processor 320 may process the demultiplexed video signal. For video signal processing, the video processor 320 may include a video decoder 325 and a scaler 335.

The video decoder 325 decodes the demultiplexed video signal and the scaler 335 scales the decoded video signal so that the video signal can be displayed on the display 180.

The video decoder 325 may be provided with decoders that operate based on various standards.

The processor 330 may control the overall operation of the image display apparatus 100 or the controller 170. For example, the processor 330 controls the tuner 110 to tune to a RF broadcast corresponding to a channel selected by a user or a previously stored channel.

The processor 330 may control the image display apparatus 100 by a user command input through the user input interface 150 or an internal program.

The processor 330 may control transmission or reception of data to or from the network interface 135 or the external device interface 130.

The processor 330 may control the operations of the DEMUX 310, the image processor 320 and the OSD generator 340 of the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a User Interface (UI), a variety of menus, widgets, icons, etc. Also, the OSD signal may include a 2D object and/or a 3D object.

The OSD generator 340 may generate a pointer which may be displayed on the display, based on a pointing signal received from the remote controller 200. In particular, such a pointer may be generated by a pointing signal processor. The OSD generator 340 may include such a pointing signal processor (not shown). The pointing signal processor (not shown) need not be provided in the OSD generator 340 and may be provided separately from the OSD generator 340.

The mixer 345 may mix the decoded video signal processed by the video processor 320 with the OSD signal generated by the OSD generator 340. The OSD signal and the decoded video signal each may include at least one of a 2D signal or a 3D signal. The mixed video signal is provided to the FRC 350.

The FRC 350 may change the frame rate of the received video signal. The FRC 350 may output an input frame rate without frame rate conversion.

The formatter 360 receives the signal mixed by the mixer 345, that is, the OSD signal and the decoded video signal, changes the format of the signal to suit the display 180, and outputs the signal with the changed format. For example, the formatter 360 may output RGB data signal. The RGB data signal may be output as a low voltage differential signal (LVDS) or mini-LVDS.

The formatter 360 may separate a 2D video signal and a 3D video signal, in order to display a 3D image. The formatter 360 may change the format of the 3D video signal or convert a 2D video signal into a 3D video signal.

The audio processor (not shown) of the controller 170 may process the demultiplexed audio signal. For audio processing, the audio processor (not shown) may include various decoders.

The audio processor (not shown) of the controller 170 may control bass, treble, and volume of the audio signal.

The data processor (not shown) of the controller 170 may process the demultiplexed data signal. For example, if the demultiplexed data signal was encoded, the data processor may decode the data signal. The encoded data signal may be Electronic Program Guide (EPG) information including broadcasting information such as the starts, ends, etc. of broadcast programs of each channel.

Although the signals from the OSD generator 340 and the video processor 320 are mixed by the mixer 345 and then are subjected to 3D processing by the formatter 360 in FIG. 3, the present invention is not limited thereto and the mixer may be located at the next stage of the formatter.

The block diagram of the controller 170 shown in FIG. 3 is exemplary. The components of the block diagrams may be integrated or omitted, or a new component may be added.

In particular, the FRC 350 and the formatter 360 need not be provided in the controller 170 and may be provided separately from the controller 170.

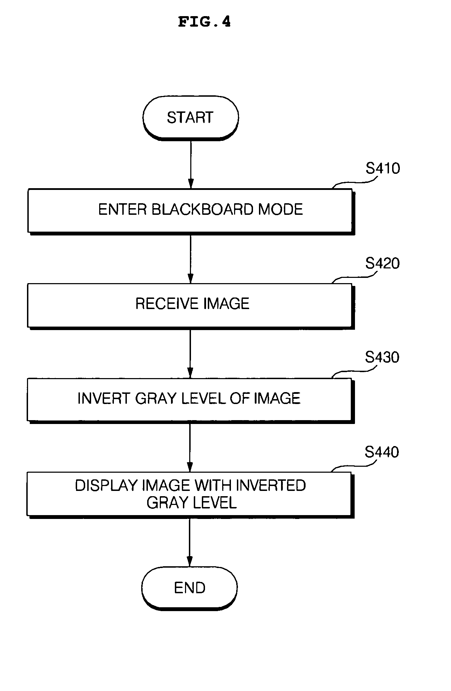

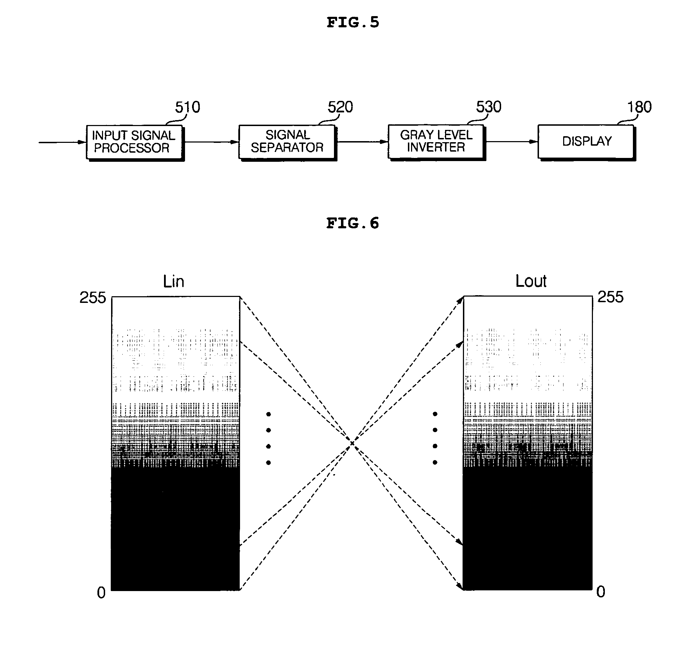

FIG. 4 is a flowchart illustrating a method for operating an image display apparatus according to an embodiment of the present invention, and FIGS. 5 to 10 are views referred to for describing various examples of the method for operating the image display apparatus, illustrated in FIG. 4.

Referring to FIG. 4, first, the image display apparatus enters a blackboard mode (S410).

For example, if a specific key of the remote controller 200 or a local key (not shown) is set to a blackboard mode entrance key, the image display apparatus enters the blackboard mode when the blackboard mode entrance key is manipulated. As another example, the image display apparatus may enter the blackboard mode using a menu such as an OSD or graphics displayed on the display 180.

The term "blackboard mode" refers to a mode in which an image similar to a blackboard such as a white board or a chalk board is displayed when an image is actually displayed.

The user can perceive text or drawings displayed on a blackboard background in such a blackboard mode.

The image display apparatus may automatically enter the blackboard mode by analyzing an input image.

For example, if the number of colors of an image frame received by the controller 170 is less than or equal to a predetermined value or if the number of colors of an image frame received by the controller 170 is less than or equal to a predetermined value and such an image frame is maintained for a predetermined time or more, the controller 170 may determine that the image display apparatus has entered the blackboard mode.

More specifically, if an image is input using a white board with a white background and black text and maintained for a predetermined time or more, the controller 170 may determine that the image display apparatus enters the blackboard mode, because the colors of the image frame are white and black and the number thereof is 2.

As another example, if an image is input using a chalk board with a blue background and white text and maintained for a predetermined time or more, the controller 170 may determine that the image display apparatus enters the blackboard mode.

As another example, if an image is input using a white board with a white background and blue or red text and maintained for a predetermined time or more, the controller 170 may determine that the image display apparatus enters the blackboard mode, because the colors of the image frame are white and blue or red and the number thereof is 2.

Although the number of colors of the image frame is two, various settings are possible. In a blackboard mode entrance setting menu displayed on the display 180, the number of colors may be set using a menu item for setting the number of colors.

Next, an image is received (S420). An input signal processor 510 may receive a broadcast image, an external input image or an image stored in the memory 140. At this time, the received image may be an image corresponding to the blackboard mode, as described above.

The input signal processor 510 processes the received image. For example, the input signal processor 510 of FIG. 5 may correspond to the video processor 220 of the controller 170. The input signal processor 510 may decode the demultiplexed video signal or scale the decoded video signal.

Next, the gray level of the received image is inverted (S430). A gray level inverter 530 inverts the gray level of the image based on the image output from the input signal processor 510.

For example, the gray level inverter 530 may invert the gray level of the image if the number of colors of the received image is less than or equal to the predetermined value or the luminance of a background region of the received image is higher than that of a region excluding the background region.

As another example, the gray level inverter 530 may separate the gray level of the received image into a first group and a second group, invert the gray level of the image corresponding to the separated first group into the gray level of a second inversion group and invert the gray level corresponding to the separated second group having the gray level lower than that of the first group into the gray level of a first inversion group.

A difference between a maximum gray level and a minimum gray level of the second inversion group may be less than a difference between a maximum gray level and a minimum gray level of the first group.

As another example, the gray level inverter 530 may separate the gray level of the received image into a first group, a second group and a third group between the first group and the second group, invert the gray level of the image corresponding to the separated first group into the gray level of a second inversion group, invert the gray level corresponding to the second group having the gray level lower than that of the first group into the gray level of a first inversion group, and may not invert the gray level of the image corresponding to the third group. That is, only the gray levels of some groups may be inverted.

The gray level of a luminance signal of the image may be inverted. A signal separator 520 may be further included between the input signal processor 510 and the gray level inverter 530. Alternatively, the signal separator 520 may be included in the gray level inverter 530.

The signal separator 520 separates the image processed by the input signal processor 510 into a chrominance signal and a luminance signal.

For example, if the image includes an RGB signal, the signal separator 520 may change the RGB signal to a YCbCr signal and output only the Y signal representing the luminance signal to the gray level inverter 530. Then, the gray level inverter 530 may invert only the gray level of the Y signal which is the luminance signal.

As another example, the signal separator 520 may separate the YCbCr signals and output the separated signal to the gray level inverter 530. The gray level inverter 530 may invert only the gray level of the Y signal which is the luminance signal and output the CbCr signal, which is a chrominance signal, without gray level inversion.

The signal separator 520 may separate the image on a per pixel basis. That is, the signal separator 520 may change the RGB signal into a YCbCr signal on a per pixel basis, output a Y signal on a per pixel basis, or output the YCbCr signal on a per pixel basis.

Next, an image with the inverted gray level is displayed (S440). The display 180 displays the image with the gray level inverted by the gray level inverter 530. At this time, the display 180 may be the above-described projector (FIG. 2A), PDP (FIG. 2B) or LCD (FIG. 2C).

For example, if a background color of an image input to the input signal processor 510 is white and a text color is black, the background color may be changed to black and the text color may be changed to white by inverting the gray level of the image. If white text is displayed on a black background, text visibility is further improved as compared to the case where black text is displayed on a white background.

By further increasing the luminance of the text and further decreasing the luminance of the background having an area wider than that of the text, the total luminance of the image frame is reduced. As a result, power consumption is reduced.

FIGS. 6 to 8 show various operations of the gray level inverter 530.

First, FIG. 6 shows the case where the gray level of an input luminance signal Lin is 0 to 255 and the gray level inverter 530 inverts the gray level of the input luminance signal and outputs the inverted gray level Lout.

For example, if the color of the background of the input image is white and the color of the text is black, the color of the background of the input image is inverted into black and the color of the text is inverted into white by the operation of the gray level inverter 530 shown in FIG. 6. More specifically, a level 255 is inverted into a level 0 and a level 0 is inverted into a level 255.

If gray (between black and white) is present in the input image, the gray is also inverted. For example, a level 135 is inverted to a level 120.

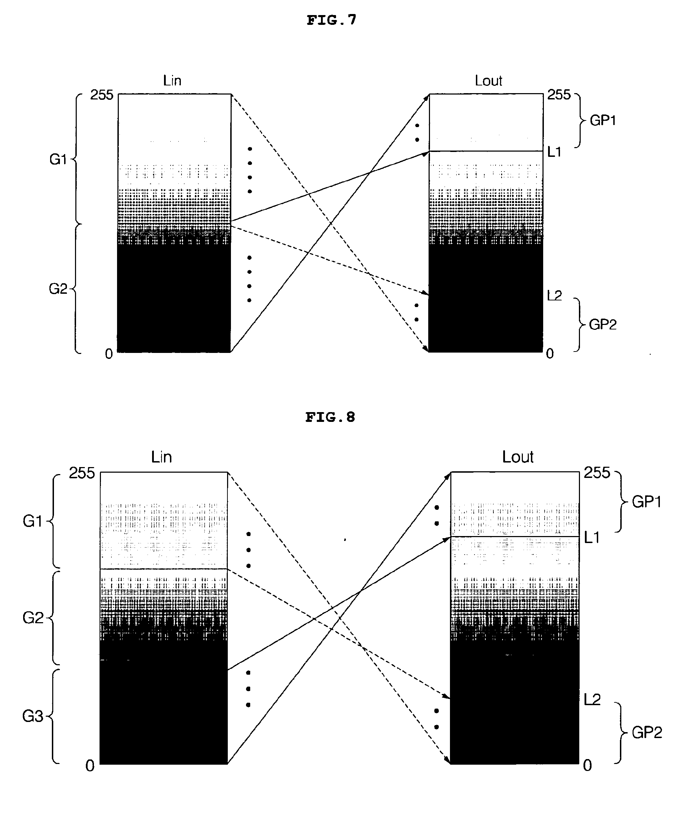

Next, FIG. 7 shows the case where the gray level of the input luminance signal Lin is 0 to 255 and the gray level inverter 530 separates the gray level of each group into groups and performs inversion upon each group.

For example, the gray levels of the input image of 128 to 255 may be set to a first group G1 and the gray levels of the input image of 0 to 127 may be set to a second group G2.

At this time, the gray level inverter 530 may invert the gray level of the first group G1 into the gray level of a second inversion group Gp2. For example, the second inversion group Gp2 may have values of 0 to 31. More specifically, a level 255 belonging to the first group G1 may be inverted into a level 0 and a level 128 may be inverted into a level 31.

The gray level inverter 530 may invert the gray level of the second group G2 into the gray level of a first inversion group Gp1. For example, the first inversion group Gp 1 may have values of 224 to 255. More specially, a level 0 belonging to the second group G2 may be inverted into the level 255 and a level 127 may be inverted into a level 224.

As shown in FIG. 7, a difference (e.g., 32) between a maximum gray level and a minimum gray level of the second inversion group Gp2 may be less than a difference (e.g., 128) between a maximum gray level and a minimum gray level of the first group. A difference (e.g., 32) between a maximum gray level and a minimum gray level of the first inversion group Gp1 may be less than a difference (e.g., 128) between a maximum gray level and a minimum gray level of the second group G2.

By setting the difference between the gray levels of the inversion group to be less than the difference between the gray levels of the group, the image may be displayed with a smaller number of gray levels. Then, the difference between the gray levels of the image is increased and thus visibility can be improved when the image with the inverted gray level is displayed.

Unlike FIG. 7, the first inversion group Gp1 and the second inversion group Gp2 may be set to specific levels, respectively. That is, the first inversion group Gp1 may be set to the level 255 which is the maximum level and the second inversion group Gp2 may be set to the level 0 which is the minimum level. Then, the difference between the gray levels of the image is further increased and thus visibility can be improved when the image with the inverted gray level is displayed.

Next, FIG. 8 shows the case where the gray level of the input luminance signal Lin is 0 to 255 similarly to FIG. 7 and the gray level inverter 530 inverts the gray level of each group. Unlike FIG. 7, inversion may not be performed with respect to a certain group.

For example, the gray levels of the input image of 192 to 255 may be set to a first group G1, the gray levels of 64 to 191 may be set to a second group G2 and the gray levels of 0 to 63 may be set to a third group.

The gray levels of the first group G1 are inverted into values of 0 to 31 of a second inversion group Gp2 and the gray levels of the third group G3 are inverted into values 224 to 255 of a first inversion group Gp1. The gray levels 64 to 191 of the second group G2 may not be inverted and the input signal Lin may be output as the inversion signal Lout without inversion. As another example, the gray levels 64 to 191 of the second group G2 may not be output as the inversion signal Lout.

Unlike FIG. 7, the first inversion group Gp1 and the second inversion group Gp2 may be set to specific levels, respectively. That is, the first inversion group Gp1 may be set to the level 255 which is the maximum level and the second inversion group Gp2 may be set to the level 0 which is the minimum level. Then, the difference between the gray levels of the image is further increased and thus visibility can be improved when the image with the inverted gray level is displayed.

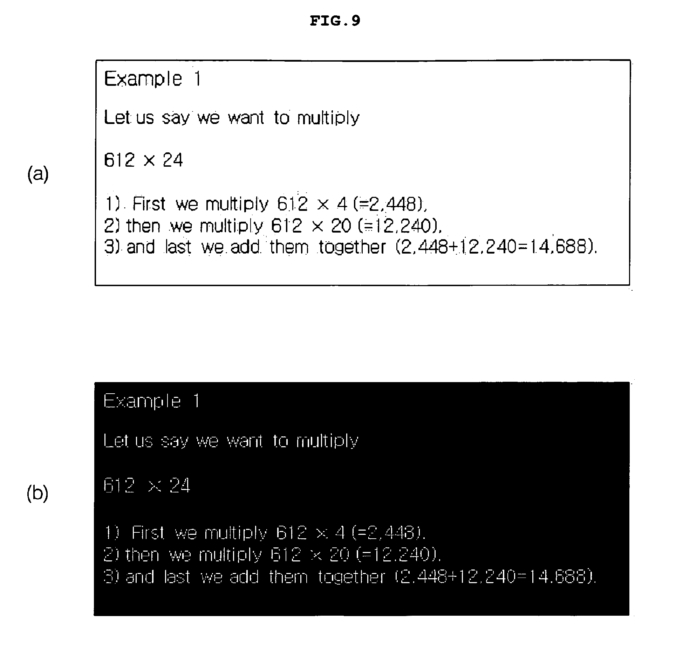

FIG. 9 shows an image obtained by inverting gray levels of an input image in a blackboard mode.

As shown in FIG. 9(a), if black text is displayed on a white background image, the gray level inverter 530 inverts the gray levels of the image. Then, as shown in FIG. 9(b), white text is displayed on a black background image. Then, text visibility is improved. Since the color of the background image occupying a wide region is black, the luminance of the image frame is decreased and power consumption is decreased.

Unlike FIG. 9, if black text is displayed on a yellow background image, the gray level inverter 530 inverts the yellow background image into a black background image and inverts the black text into white text.

More specifically, only the gray level of the luminance signal component excluding the chrominance signal component of the yellow background image may be inverted into a luminance level corresponding to black. The gray level of the black text may be inverted into white.

The display 180 may display only the luminance component excluding the chrominance component. That is, as shown in FIG. 9(b), white text may be displayed on the black background according to the inverted luminance levels.

Operation of the gray level inverter 530 may be variously performed. For example, gray level inversion may be partially performed according to combinations of a background image and text. For example, if any one of the background image and text includes only a luminance signal, any one of the background image and text may be subjected to gray level inversion.

Hereinafter, gray level inversion of a background image will be described.

For example, if an image including white text on a blue background image is input, the signal separator 520 separates the blue background image into a chrominance signal and a luminance signal. At this time, since the chrominance signal of the blue background image is detected, the gray level of the luminance signal of the blue background image may be regarded as 255, regardless of the original gray level. The gray level of the white text is originally 255, but may be regarded as 0.

The gray level inverter 530 performs gray level inversion. That is, the gray level of the luminance signal corresponding to the blue background image may be inverted from 255 to 0. The gray level of the luminance signal corresponding to the white text may be inverted from 0 to 255. Then, the blue background may be changed to a black background and white text may be displayed on the black background.

As another example, if an image including blue or red text on a white background image is input, the signal separator 520 separates the blue or red text into a chrominance signal and a luminance signal. At this time, since the chrominance signal of the blue or red text is detected, the gray level of the luminance signal of the blue or red text may be regarded as 0, regardless of the original gray level. The gray level of the white background image may be regarded as 255.

The gray level inverter 530 performs gray level inversion. That is, the gray level of the luminance signal corresponding to the white background image may be inverted from 255 to 0. The gray level of the luminance signal corresponding to the blue or red text may be inverted from 0 to 255. Then, the blue or red text may be changed to white text and white text may be displayed on the black background.

The gray level inverter 530 may invert the gray level of the luminance signal component, more particularly, a black-and-white signal. A chrominance signal component, for example, a signal excluding a black-and-white signal may be displayed without gray level inversion. As described above, a chrominance signal component, for example, a signal excluding a black-and-white signal need not be displayed on the display 180.

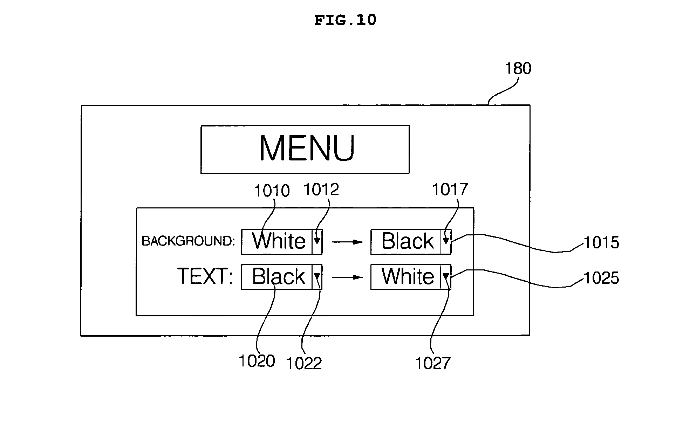

Next, FIG. 10 shows a menu for setting the color of a background image and text displayed in a blackboard mode.

For example, as shown in FIG. 10, a blackboard mode setting menu may be displayed on the display 180. The blackboard mode setting menu may include an object for setting a color, the gray level of which will be inverted, or an object for setting a color to be displayed.

Although an object for setting a background image from white 1010 to black 1015 and an object for setting a text image from black 1020 to white 1025 are shown in FIG. 10, various other examples are possible. That is, a color to be changed (inverted) may be selected using color adjustment objects 1012 and 1022 before change and a changed color may be selected using color adjustment objects 1017 and 1027 after change. Therefore, it is possible to display a blackboard mode using colors desired by the user.

The blackboard mode setting menu may further include an object for setting the number of colors and an object for setting a time for maintaining an image frame if an image, in which the number of colors is less than a predetermined value, is input, in order to automatically enter a blackboard mode.

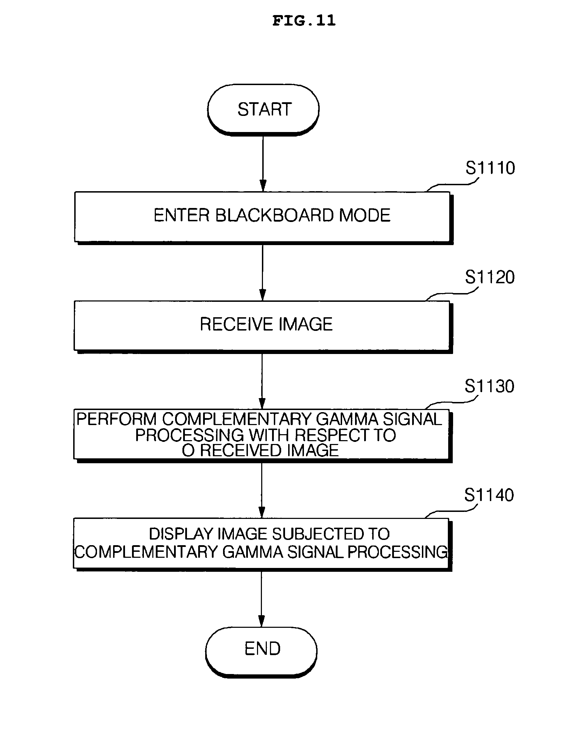

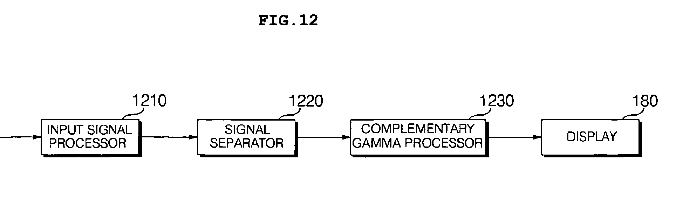

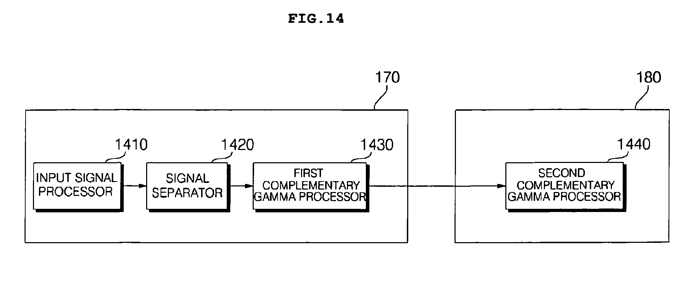

FIG. 11 is a flowchart illustrating a method for operating an image display apparatus according to an embodiment of the present invention, and FIGS. 12 to 15 are views referred to for describing various examples of the method for operating the image display apparatus, illustrated in FIG. 11.

The method for operating the image display apparatus of FIG. 11 is substantially equal to the method for operating the image display apparatus of FIG. 4. That is, steps S1110 to S1120 respectively correspond to steps S410 to S420 and thus a description thereof will be omitted.

Next, in step S1130, the received image is subjected to complementary gamma signal processing. A complementary gamma processor 1230 performs complementary gamma processing with respect to the image output from the input signal processor 1210.

The complementary gamma processor 1230 does not perform gamma correction in proportion to the input signal, but performs complementary gamma correction in inverse proportion to the input signal.

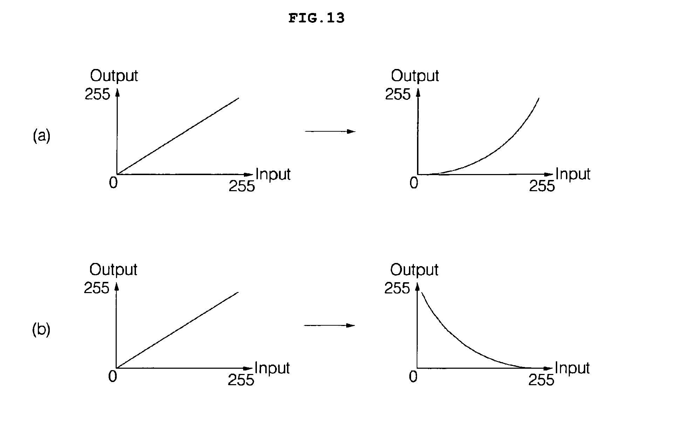

FIG. 13(a) shows an example in which gamma correction is performed in proportion to an input signal with levels of 0 to 255 to output a signal. If the input signal is an RGB signal, an RGB signal, the level of which is proportional to the level of the input signals, is output.

FIG. 13(b) shows an example in which complementary gamma correction is performed in inverse proportion to an input signal with levels of 0 to 255 to output a signal. If the input signal is an RGB signal, the complementary gamma processor 1230 outputs an RGB signal, the level of which is inversely proportional to the level of the input signals.

The complementary gamma processor 1230 may perform complementary gamma processing with respect to only a luminance signal of the image. At this time, a signal separator 1220 may be further included between the input signal processor 1210 and the complementary gamma processor 1230. Alternatively, the signal separator 1220 may be included in the complementary gamma processor 1230.

The signal separator 1220 separates the image processed by the input signal processor 510 into a chrominance signal and a luminance signal.

For example, if the image includes an RGB signal, the signal separator 1220 may change the RGB signal into a YCbCr signal and output only the Y signal representing the luminance signal to the complementary gamma processor 1230. Then, the complementary gamma processor 1230 may perform complementary gamma processing with respect to only the Y signal which is the luminance signal.

As another example, the signal separator 1220 may separate the YCbCr signal and output the separated signal to the complementary gamma processor 1230. The complementary gamma processor 1230 may perform complementary gamma processing with respect to only the Y signal which is the luminance signal and output the CbCr signal, which is a chrominance signal, without complementary gamma processing.

Next, the image subjected to complementary gamma processing is displayed (S1140). The display 180 displays the image subjected to complementary gamma processing by the gamma processor 1230. At this time, the display 180 may be the above-described projector (FIG. 2A), PDP (FIG. 2B) or LCD (FIG. 2C).

For example, if the color of the background of an image input to the input signal processor 1210 is white and the text color is black, an image including a black background and white text may be displayed according to the complementary gamma processing of the image. If white text is displayed on a black background, visibility is further improved as compared to the case where black text is displayed on a white background.

By further increasing the luminance of text and further decreasing the luminance of a background having a wider area than that of the text, the overall luminance of the image frame is decreased and, as a result, power consumption is decreased.

Although the complementary gamma processor 1230 performs complementary gamma processing as shown in FIG. 12, complementary gamma processing may be variously performed.

For example, the controller 170 of the image display apparatus 100 may include an input signal processor 1410, a signal separator 1420 and a first complementary gamma processor 1430 and the display 180 may include a second complementary gamma processor 1440.

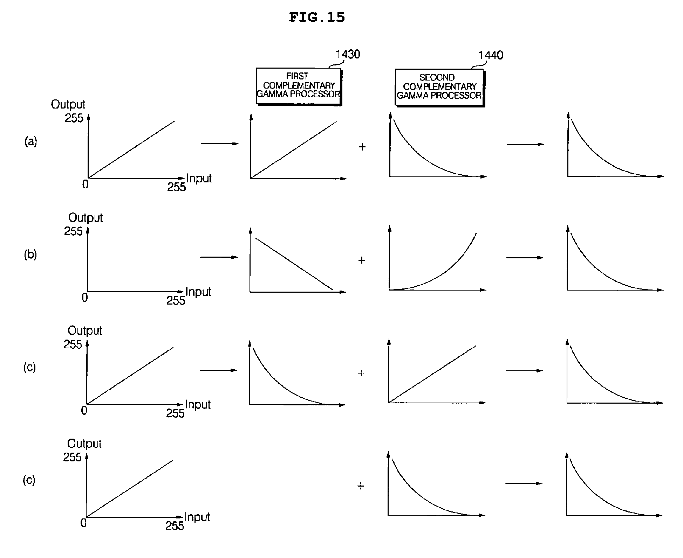

FIG. 15 shows various examples of the operations of the first complementary gamma processor 1430 and the second complementary gamma processor 1440.

As shown in FIG. 15(a), the first complementary gamma processor 1430 may perform gamma processing in proportion to the input signal without complementary gamma processing. In this case, the second complementary gamma processor 1440 may perform complementary gamma processing.

As another example, as shown in FIG. 15(b) or 15(c), the first complementary gamma processor 1430 may perform complementary gamma processing and the second complementary gamma processor 1440 may perform gamma processing in proportion to the input signal.

As another example, as shown in FIG. 15(d), the first complementary gamma processor 1430 need not perform complementary gamma processing and, instead, the second complementary gamma processor 1440 may perform complementary gamma processing. Conversely, the first complementary gamma processor 1430 may perform complementary gamma processing and the second complementary gamma processor 1440 may not perform complementary gamma processing.

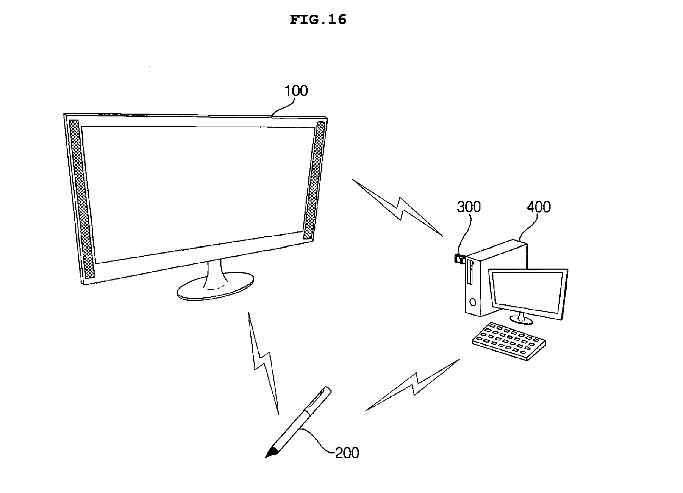

FIG. 16 is a diagram showing the configuration of an image display apparatus according to another embodiment of the present invention.

The image display apparatus of FIG. 16 is similar to the image display apparatus of FIG. 1 except that a touch pen type input and display is possible.

Gray level inversion or complementary gamma processing of the embodiment of the present invention is applicable to a pen touch type image display system.

Hereinafter, a touch pen type image display system will be described.

The image display apparatus 100 according to the embodiment of the present invention, a touch pen remote controller 200, a pointing signal receiver 300 and a pointing signal processor 400 configure an image display system.

The image display apparatus 100 may include a touch pen type plasma display panel. The plasma display panel includes a phosphor layer formed in a discharge cell partitioned by a barrier wall and a plurality of electrodes.

In the plasma display panel, when a drive signal is supplied to each electrode, discharge occurs in the discharge cell by the drive signal. When discharge occurs in the discharge cell by the drive signal, discharge gas filled in the discharge cell generates vacuum ultraviolet rays and the phosphor layer formed in the discharge cell emits light by vacuum ultraviolet rays, thereby generating visible light. By visible light, the image is displayed on the screen of the plasma display panel.

During gas discharge, the plasma display panel emits infrared rays by xenon (Xe) in addition to visible light.

The touch pen type remote controller 200 according to the embodiment of the present invention detects light emitted from the discharge cell of the plasma display panel and, more particularly, infrared rays IR.

For example, if the remote controller 200 approaches or contacts a specific discharge cell of the plasma display panel, the remote controller 200 may output a timing signal based on the detected light and computes x and y coordinate signals of the discharge cell based on the timing signal. The x and y coordinate signals of the discharge cell are converted into RF signals to be transmitted to the pointing signal receiver 300.

The pointing signal receiver 300 receives and sends the RF type x and y coordinate signals to the pointing signal processor 400. The pointing signal receiver 300 may include an antenna for receiving an RF signal and an RF module for processing the RF signal. The RF type x and y coordinate signals may be transmitted to the pointing signal processor 400 wirelessly or by wire. For example, the pointing signal processor 300 may be a universal serial bus (USB), Bluetooth Dongle, etc.

The pointing signal processor 400 receives and processes the x and y coordinate signals and transmits a predetermined image signal to the image display apparatus 100. Then, the image display apparatus 100 and, more particularly, the plasma display panel displays a predetermined image (a pointing image, etc.) on the discharge cell corresponding to the coordinates (x and y coordinates).

The pointing signal processor 400 may include a program for executing a touch pen mode, execute the program and perform signal processing and transmission upon the received x and y coordinates. For example, the pointing signal processor 400 may be a personal computer (PC).

As such, a predetermined image (a pointing image, etc.) may be displayed at specific coordinates of a display panel using the pen type remote controller 200 in a contact or noncontact manner. That is, when the remote controller 200 is moved as writing on the plasma display panel of the image display apparatus 100, notes may be taken along the movement path of the remote controller.

In the embodiment of the present invention, such a remote controller is referred to as a touch pen type remote controller and a touch pen mode according to the embodiment of the present invention is distinguished from a touch mode using a constant pressure method or a touch mode using a capacitive method.

Although the touch pen type image display apparatus 100, the pointing signal receiver 300 and the pointing signal processor 400 are separately shown in FIG. 16, at least the pointing signal processor 400 may be included in the image display apparatus 100. Therefore, one image display apparatus can simply perform a touch pen mode.

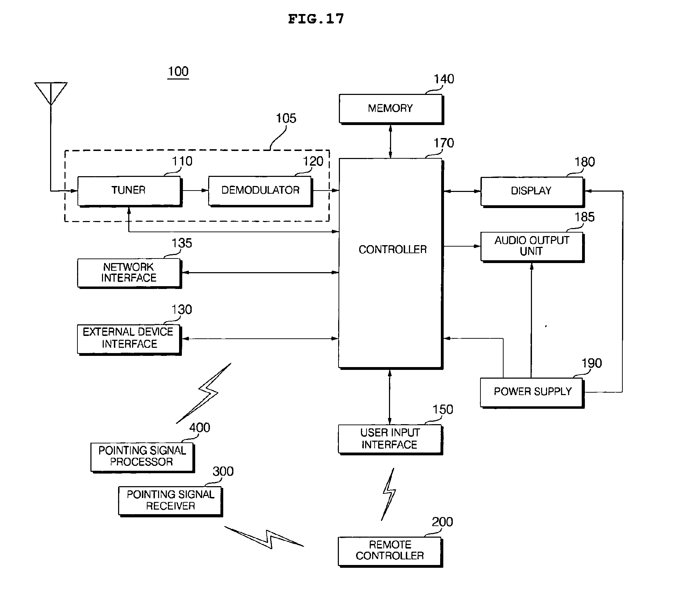

FIG. 17 is a block diagram showing the internal configuration of the image display apparatus of FIG. 16.

FIG. 17 is similar to FIG. 1 and thus a difference therebetween will be focused upon.

The external device interface 130 may transmit or receive data to or from the pointing signal processor 400.

The remote controller 200 is used to input a user input signal through the user input interface 150. In particular, according to the embodiment of the present invention, the remote controller 200 is used to detect light emitted from a specific discharge cell of the plasma display panel, input coordinate information of the specific discharge cell to the pointing signal receiver 300 and the pointing signal processor 400 and input an image signal corresponding thereto to the image display apparatus 100.

The coordination information based on the light signal detected by the remote controller 200 may be input to the pointing signal receiver 300 and the pointing signal processor 400 of the image display apparatus 100. The pointing signal processor 400 may generate the image signal based on the coordinate information and send the image signal to the controller 170. The controller 170 may control the display of a predetermined image corresponding to the image signal on the plasma display panel. A predetermined program described with reference to FIG. 16 may be installed in the pointing signal processor 400. Unlike FIG. 17, the pointing signal receiver 300 and the pointing signal processor 400 may be included in the user input interface 150.

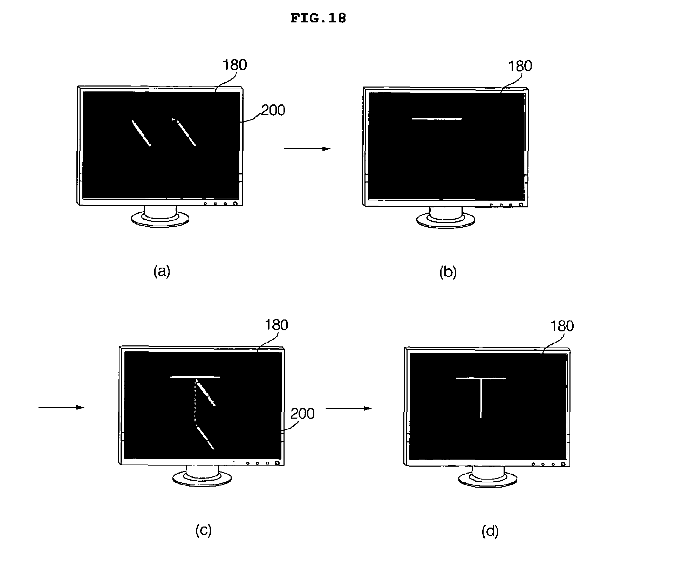

FIG. 18 shows an example of the operation of the remote controller for controlling the image display apparatus of FIG. 16.

As shown in FIG. 18(a), if the touch pen type remote controller 200 is moved on or near the plasma display panel 180 from a first point to a second point, as shown in FIG. 18(b), an image corresponding to the movement of the remote controller is displayed on the display 180. In FIG. 18(b), an image having a shape "-" is displayed.

In particular, in the embodiment of the present invention, if a blackboard mode is applied, the color of a background image may be black and the color of the image having the shape "-" may be white.

Next, as shown in FIG. 18(c), if the touch pen type remote controller is moved on or near the plasma display panel 180 from a third point to a fourth point, as shown in FIG. 18(d), an image corresponding to the movement of the remote controller is displayed on the display 180. In FIG. 18(d), an image having a T-shape is displayed. At this time, the color of the image having the T-shape may be white and the color of the background image may be black.

Unlike FIG. 18, if the touch pen type remote controller 200 is continuously located at a specific discharge cell, an image having a shape "." is displayed on the plasma display panel 180.

By the touch pen method, the user can easily display an image having a desired shape on the plasma display panel.

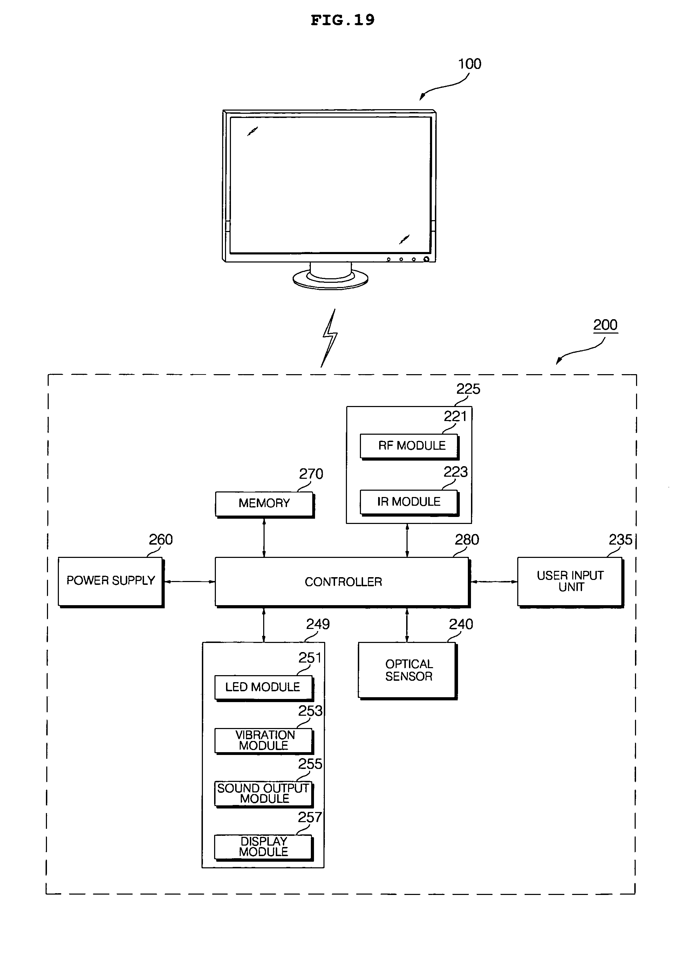

FIG. 19 is a block diagram showing the internal configuration of the remote controller of FIG. 2.

The touch pen type remote controller 200 may include an RF communication unit 225, a user input unit 235, an optical sensor 240, an output unit 249, a power supply 260, a memory 270 and a controller 280.

The RF communication unit 225 may include an RF module 221 or an IR module 223, for communication with the pointing signal receiver 300.

The IR module 223 or the RF module 221 may transmit coordinate signals (x, y) corresponding to a discharge cell computed based on light detected by the optical sensor 240 to the pointing signal receiver 300 according to an IR method or an RF method. The IR module 223 or the RF module 221 may transmit a control signal, such as a power on/off signal, of the remote controller 200.

The user input unit 235 may include a keypad, a button, a touch pad, a touchscreen, etc. The user may manipulate the user input unit 235 so as to input a command associated with the image display apparatus 100 to the remote controller 200. If the user input unit 235 includes a hard key button, the user may push the hard key button so as to input a command associated with the image display apparatus 100 to the remote controller 200.

The user input unit 235 may include a power on/off key (not shown) and a touch pen mode key (not shown).

For example, the remote controller 200 may be powered on or off by manipulating the power on/off key and enter a touch pen mode by manipulating the touch pen mode key.

The user input unit 235 may include various input means manipulated by the user and the present embodiment does not limit the scope of the present invention.

The optical sensor 240 may detect infrared rays emitted from a specific discharge cell of the plasma display panel of the image display apparatus 100.

The output unit 249 may output a video or audio signal corresponding to manipulation of the user input unit 235 or corresponding to a signal transmitted from the image display apparatus 100. By the output unit 249, the user may perceive manipulation of the user input unit 235 or control of the image display apparatus 100.

For example, the output unit 249 may include an LED module 152 turned on when the user input unit 235 is manipulated or a signal is transmitted or received to or from the image display apparatus 100 through the RF communication unit 225, a vibration module 253 for generating vibrations, a sound output module 255 for outputting sound, a display module 257 for outputting an image, and so on.

The power supply 260 supplies power to the remote controller 200. The power supply 260 enters a standby mode so as not to apply power to some modules if the remote controller 200 does not detect light for a first predetermined time or more.

The memory 270 may store various programs, application data, etc. necessary for control or operation of the remote controller 200. In particular, for pairing operation with the pointing signal processor 400, the memory 270 may store information about a specific frequency band or a transmission data unit of a plurality of channels.

The controller 280 receives, from the optical sensor 240, a timing signal corresponding to a light detection signal obtained by detecting light emitted from a specific discharge cell of the plasma display panel, in a touch pen mode.

The controller 280 processes the received timing signal and computes x and y coordinate signals of the plasma display panel.

The controller 280 may perform signal conversion such that the computed x and y coordinate signals are transmitted using an RF method. The converted RF x and y coordinate signals may be output to the RF module 221.

The controller 280 may control the pairing operation with the pointing signal processor 400 through the pointing signal receiver 300, if the power on/off key 775 is manipulated to supply power to the remote controller 200. The pairing operation may be performed before the touch pen mode key 235 is manipulated so as to enter the touch pen mode.

The remote controller 200 may be used as a pointing device for generating a pointing signal corresponding to movement of the remote controller, when the mode is not the touch pen mode.

FIGS. 20 to 22 are diagrams explaining the operation of the plasma display panel in the touch pen mode according to an embodiment of the present invention.

Referring to FIG. 20, at least one of a plurality of subfields configuring one frame may be set to a scan subfield (scan SF) in the touch pen mode.

For example, a first subfield and a second subfield of the plurality of subfields of the frame may be used as scan subfields for detecting a touch position. The remaining subfields excluding the scan subfield among the plurality of subfields of the frame may be normal subfields (normal SF).

In the normal mode, the frame does not include the scan subfields and all subfields included in the frame are the normal subfields.

In other words, in the touch pen mode, if the touch pen type remote controller 200 is operated, at least one of the plurality of subfields of the frame may be set to the scan subfield.

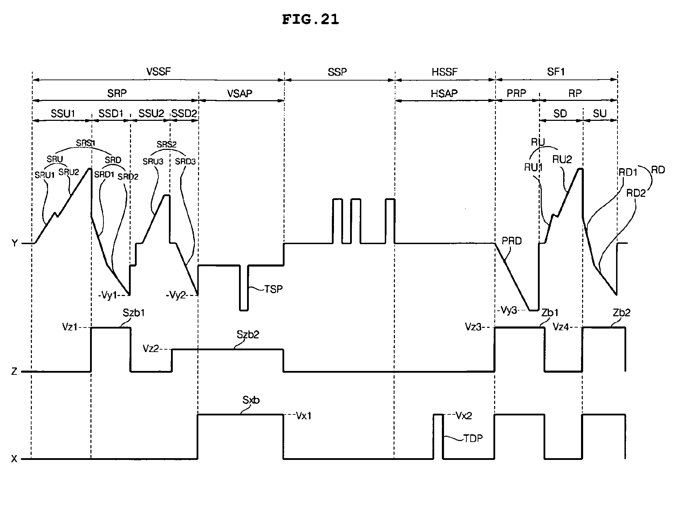

Referring to FIG. 21, the scan subfields may include a vertical scan subfield VSSF for detecting the vertical position of a touch position and a horizontal scan subfield HSSF for detecting the horizontal position of a touch position.

For example, in the touch pen mode, a first subfield of the plurality of subfields of the frame may be a vertical scan subfield and a second subfield may be a horizontal scan subfield. Within one frame, vertical scan subfields and horizontal scan subfields may be continuously arranged.

In a vertical scan address period VSAP of the vertical scan subfield VSSF, a touch scan signal TSP falling from a scan reference voltage Vsc may be supplied to a scan electrode.

Preferably, the touch scan signal TSP may be sequentially supplied to a plurality of scan electrodes Y. Alternatively, the touch scan signal TSP may be supplied to at least two scan electrodes Y at substantially the same time.

When the touch scan signal TSP is supplied to the scan electrode Y, the voltages of the address electrode X and the sustain electrode Z may be substantially constantly maintained.

If the voltage of the address electrode X is higher than the voltage of the sustain electrode Z when the touch scan signal TSP is supplied to the scan electrode Y in the vertical scan address period VSAP, discharge may occur between the scan electrode Y and the address electrode X. Hereinafter, discharge sequentially occurring in the vertical scan address period VSAP is referred to as vertical address discharge.

In an address period of a horizontal scan subfield (HSSF) (hereinafter, referred to as a horizontal scan address period HSAP), a touch data signal TDP may be supplied to the address electrode X.

Preferably, the touch data signal TDP may be sequentially supplied to the plurality of address electrodes X. Alternatively, the touch data signal TDP may be supplied to at least two address electrodes X at substantially the same time.

When the touch data signal TDP is supplied to the address electrode X, the voltages of the address electrode X and the sustain electrode Z may be substantially constantly maintained.

If the voltages of the scan electrode Y and the sustain electrode Z are constantly maintained when the touch data signal TDP is supplied to the address electrode X in the horizontal scan address period VSAP, discharge may occur between the scan electrode Y and the address electrode X or discharge may occur between the sustain electrode Z and the address electrode X. Hereinafter, discharge sequentially occurring in the horizontal scan address period HSAP is referred to as horizontal address discharge.

The above-described remote controller, for example, the remote controller 200 of FIG. 18 may acquire information corresponding to a vertical coordinate (y coordinate) of a touch position based on vertical address discharge occurring in a vertical scan address period VSAP, that is, vertical address light, and acquire information corresponding to a horizontal coordinate (x coordinate) of a touch position based on horizontal address discharge occurring in a horizontal scan address period HSAP, that is, horizontal address light.

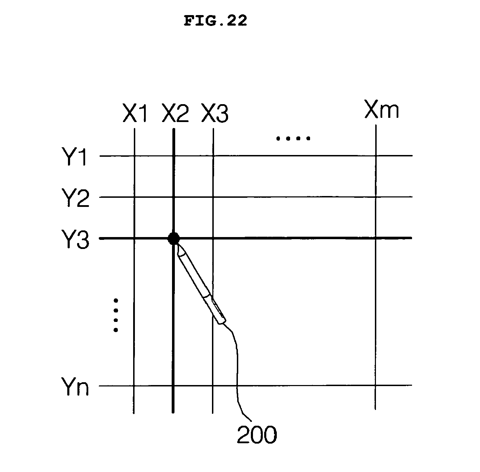

For example, in the touch pen mode, as shown in FIG. 22, if is assumed that the remote controller 20 is located at a first scan electrode line Y3 and a second address electrode line X2, the remote controller 200 detects vertical address light generated at the third scan electrode line Y3 in the vertical scan subfield VSSF period of the scan subfield as shown in FIG. 22. Horizontal address light generated at the second address electrode line X2 of the horizontal scan subfield HSSF period of the scan subfield is detected.

In particular, it is determined that the vertical coordinate of the touch position is Y3 based on the vertical address light detection timing generated at the third scan electrode line Y3 and it is determined that the horizontal coordinate of the touch position is X2 based on the horizontal address light detection timing generated at the second address electrode line X2.

The vertical light detection timing and the horizontal light detection timing may be calculated based on scan sustain periods SSP. Thus, it is possible to easily acquire coordinate information of the touch position.

As shown in FIG. 21, in a scan sustain period SSP between the vertical scan address period VSAP and the horizontal scan address period HSAP, a touch sustain signal TSUS may be supplied to at least one of the scan electrode Y and the sustain electrode Z.

Alternatively, in the scan sustain period SSP, the touch sustain signal TSUS may be alternately supplied to the scan electrode Y and the sustain electrode Z.

The scan sustain period SSP of FIG. 21 may include a sync sustain period and an identification sustain period. The scan sustain period may also be called a reference sustain period.

Although two sync sustain pulses are applied to the scan electrode Y in the sync sustain period in FIG. 21, various examples are possible according to settings. In FIG. 21, after the sync sustain pulse, that is, after a second sync sustain pulse, the identification sustain pulse is applied to the scan electrode Y.

Using the touch pen type remote controller, white text is displayed on a black background in the above-described blackboard mode, thereby improving visibility and reducing power consumption.

The image display apparatus and the method for operating the same according to the foregoing embodiments are not restricted to the embodiments set forth herein. Therefore, variations and combinations of the exemplary embodiments set forth herein may fall within the scope of the present invention.

The method for operating an image display apparatus according to the foregoing embodiments may be implemented as code that can be written to a computer-readable recording medium and can thus be read by a processor. The computer-readable recording medium may be any type of recording device in which data can be stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for operating an image display apparatus, comprising:
entering a blackboard mode;
receiving an image;
inverting a gray level of the received image; and
displaying the image with the inverted gray level.

2. The method according to claim 1, wherein the inverting is performed only when the number of colors of the received image is less than or equal to a predetermined value.

3. The method according to claim 1, wherein the inverting is performed when luminance of a background region of the received image is higher than luminance of a region excluding the background region.

4. The method according to claim 1, wherein the inverting includes:
separating the gray level of the received image into a first group and a second group, and
inverting the gray level of an image corresponding to the separated first group into the gray level of a second inversion group and inverting the gray level corresponding to the second group having the gray level lower than that of the first group into the gray level of a first inversion group.

5. The method according to claim 4, wherein a difference between a maximum gray level and a minimum gray level of the second inversion group is less than a difference between a maximum gray level and a minimum gray level of the first group.

6. The method according to claim 1, wherein the inverting includes:
separating the gray level of the received image into a first group, a second group and a third group between the first group and the second group; and
inverting the gray level of an image corresponding to the separated first group into the gray level of a second inversion group and inverting the gray level corresponding to the second group having the gray level lower than that of the first group into the gray level of a first inversion group; and
wherein the gray level of an image corresponding to the third group is not inverted.

7. The method according to claim 1, further comprising separating the image into a chrominance signal and a luminance signal,
wherein the inverting includes inverting the gray level of the separated luminance signal.

8. The method according to claim 7, wherein the displaying includes displaying only the inverted luminance signal.

9. The method according to claim 1, wherein the inverting includes inverting the gray level of the received image into a first gray level and a second gray level.

10. The method according to claim 1, wherein the entering the blackboard mode includes entering the blackboard mode if the number of colors of the received image is less than or equal to a predetermined value and the image, in which the number of colors is less than or equal to the predetermined number, is maintained for a predetermined time.

11. The method according to claim 1, further comprising displaying a menu including an object for setting a color, the gray level of which will be inverted, or an object for setting a color to be displayed in the blackboard mode.

12. An image processing apparatus comprising:
an input signal processor (510) configured to process a received image and output the processed image;
a gray level inverter (530) configured to invert a gray level of the image when entering a backboard mode; and
a display (180) configured to display the image with the inverted gray level.

13. The image display apparatus according to claim 13, further comprising a signal separator (520) configured to separate the image into a chrominance signal and a luminance signal,
wherein the gray level inverter (530) inverts the gray level of the separated luminance signal.

14. The image display apparatus according to claim 12, wherein the gray level inverter (530) inverts the gray level of the image if the number of colors of the received image is less than or equal to a predetermined value and luminance of a background region of the received image is higher than luminance of a region excluding the background region.
